# FASCICULE DE BREVET EUROPEEN

(11) **EP 1 468 600 B1**
(45) Date de publication et mention de la délivrance du brevet: **12.07.2006**
(21) Numéro de dépôt: 04360036.0
(22) Date de dépôt: 06.04.2004
(51) Int. Cl.: A01D 90/10

(54) **Machine agricole pour la distribution de produits**
Landwirtschaftliche Maschine für die Verteilung von Produkten
Agricultural implement for the distribution of products

(30) Priorité: 17.04.2003 FR 0304798
(43) Date de publication de la demande: 20.10.2004
(73) Titulaire: Kuhn-Audureau S.A., 85260 La Copechagniere (FR)
(72) Inventeur: Rostoucher, Guy, 85170 Belleville sur vie (FR); Berniche, Alexandre, 85000 La Roche sur Yon (FR); Rulleau, Samuel, 85140 Boulogne (FR)
(74) Mandataire: Andres, Jean-Claude

(56) Documents cités:
- FR-A- 2 450 039
- FR-A- 2 509 570
- FR-A- 2 618 047
- GB-A- 2 089 760
- US-A- 3 873 032

## Description

La présente invention se rapporte à une machine agricole pour la distribution de produits aux animaux, comportant notamment un caisson apte à recevoir les produits, un dispositif de démêlage et d'éjection situé à l'extrémité avant du caisson et au moins un dispositif de déplacement des produits qui est situé dans le fond du caisson.

Une telle machine permet de distribuer de la nourriture telle que du foin, ou de l'ensilage aux animaux ou bien de projeter de la paille sur leurs litières. Lesdits produits sont chargés dans le caisson notamment sous forme de balles rondes. En fonction de sa taille, le caisson peut recevoir une ou plusieurs de ces balles. Pour la distribution, ces balles sont amenées vers le dispositif de démêlage et d'éjection par le dispositif de déplacement situé dans le fond du caisson. Dans le cas de balles rondes le prélèvement des produits sur ces balles est plus facile lorsqu'elles tournent sur elles-mêmes de sorte que les différentes couches se déroulent. Cette rotation est en principe provoquée par le mouvement du dispositif de déplacement situé dans le fond du caisson.

Sur les machines connues, comme par exemple dans le brevet FR 2 784 541, les balles supplémentaires qui se trouvent dans le caisson sont poussées contre la balle qui est en train d'être distribuée et, de ce fait, freinent voire arrêtent sa rotation. Le prélèvement des produits sur cette dernière est ainsi perturbé, ce qui entraîne une grande irrégularité de la distribution vers les animaux.

La demande de brevet GB 2 089 760 décrit une machine pour la distribution de produits aux animaux comportant une tôle plafond dont le double rôle consiste à éviter un recul, sous l'action du dispositif de démêlage, de la balle en train d'être distribuée et une projection vers l'extérieur des produits déchiquetés. Sur cette machine la ou les balles supplémentaires qui se trouvent dans le caisson peuvent également perturber le prélèvement et la distribution des produits.

La présente invention a pour but de remédier à ces inconvénients des machines connues. Elle doit notamment permettre d'obtenir une plus grande régularité au niveau de la quantité des produits distribués.

A cet effet, une importante caractéristique de l'invention consiste en ce que la machine comporte des moyens d'immobilisation durant la distribution des produits qui se situent dans le caisson en arrière de ceux en train d'être distribués. Ces moyens d'immobilisation peuvent être constitués par des griffes latérales ou des pièces analogues déplaçables dans au moins une position où elles sont saillantes dans le volume intérieur du caisson et au moins une autre position où elles sont escamotées.

Dans la première de ces positions, les griffes sont en prise avec la balle de produits qui se situe à l'arrière de celle qui est la plus proche du dispositif de démêlage et d'éjection. Elles bloquent alors ladite balle et l'empêchent de perturber la distribution de la balle qui la précède en venant en contact avec celle-ci. Dans leur deuxième position, les griffes sont dégagées pour permettre aux balles suivantes d'avancer vers le dispositif de démêlage et d'éjection.

Selon d'autres caractéristiques de l'invention les griffes sont articulées sur les parois latérales du caisson au moyen d'axes sensiblement horizontaux. Ces griffes sont déplaçables autour de ces axes d'articulation au moyen de vérins hydrauliques. Ces déplacements s'effectuent avantageusement du bas vers le haut pour amener les griffes dans la position où elles sont saillantes dans le volume intérieur du caisson. De cette manière elles soulèvent légèrement la ou les balles de produits lorsqu'elles sont mises en position pour les bloquer, ce qui permet notamment de délester le dispositif de déplacement qui se situe dans le fond du caisson.

D'autres caractéristiques et avantages de l'invention ressortiront des revendications et de la description ci-après d'exemples de réalisation non limitatifs de l'invention, avec références aux dessins annexés dans lesquels :
- la figure 1 représente une coupe longitudinale partielle d'une machine selon l'invention,
- la figure 2 représente une vue de derrière de la machine avec le dispositif de blocage dans une première position,
- la figure 3 représente une vue de derrière de la machine avec le dispositif de blocage dans une deuxième position,
- la figure 4 représente une vue analogue à celle de la figure 2 d'une variante de réalisation.

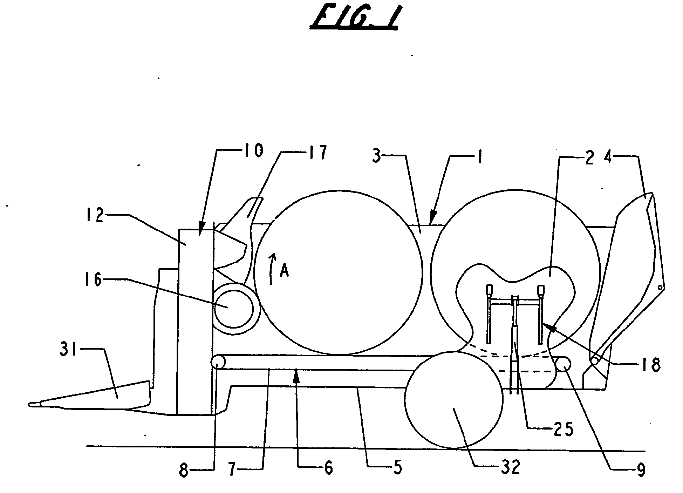

Telle qu'elle est représentée sur les figures 1 à 3, la machine selon l'invention comporte un caisson (1) d'une longueur telle qu'il puisse par exemple contenir au moins deux balles de produits tels que du foin ou de la paille, formées à l'aide d'une presse. Ce caisson (1) possède deux parois latérales (2 et 3) et une paroi arrière (4) formant une porte de chargement. Le fond du caisson (1) est constitué par un plancher (5) avec un dispositif de déplacement (6) des produits de l'arrière vers l'avant du caisson (1). Ce dispositif de déplacement (6) est constitué par un tapis (7) passant sur des rouleaux (8 et 9) dont l'un peut être entraîné en rotation, mécaniquement ou par un moteur hydraulique, en vue d'actionner ledit tapis. Sur le côté avant du caisson (1) est disposé un dispositif de démêlage et d'éjection (10). Ce dispositif est constitué par une turbine (11) logée dans un carter (12) qui communique avec le caisson (1) et qui comporte une goulotte d'éjection latérale (13). La turbine (11) se compose notamment d'un plateau (14) muni de pales (15) plus ou moins radiales pour le démêlage et l'éjection des produits. Ledit plateau (14) possède un axe de rotation autour duquel il peut être entraîné mécaniquement ou hydrauliquement. Dans la partie avant du caisson (1) est également monté un tambour de dosage (16) qui coopère avec des organes de retenue en forme de plaques verticales (17). Ledit tambour (16) est sensiblement horizontal et comporte des couteaux sur sa périphérie. Il peut être entraîné en rotation à l'aide de moyens mécaniques ou hydrauliques non représentés.

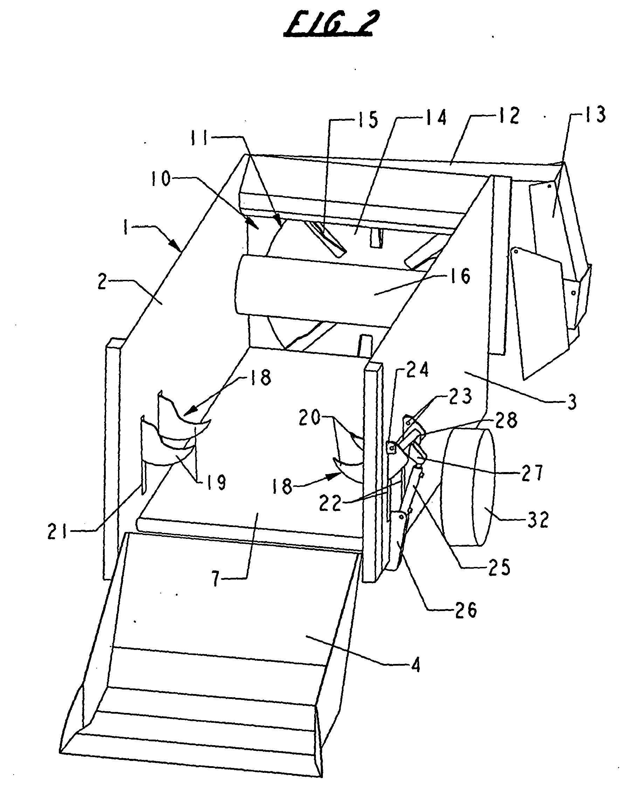

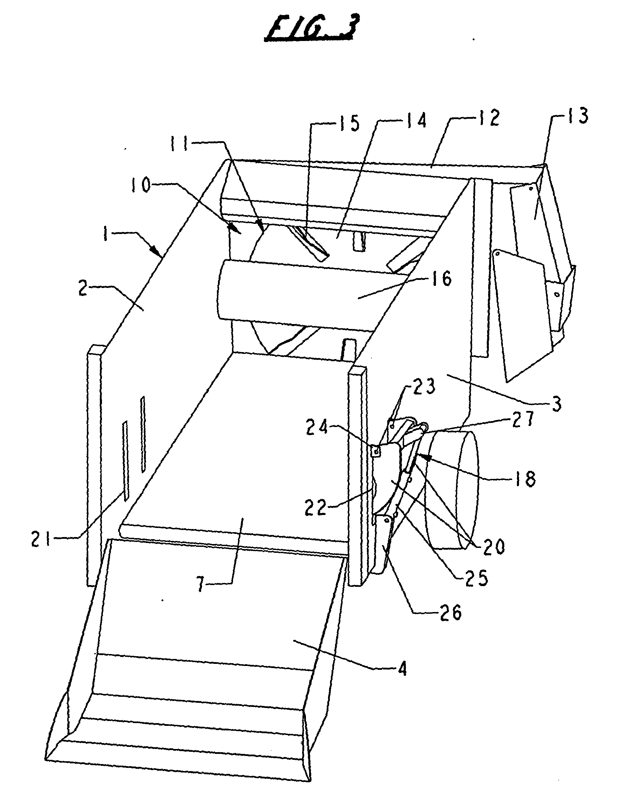

Comme cela ressort notamment des figures 1 et 2, la machine comporte des moyens (18) d'immobilisation durant la distribution d'au moins une partie des produits chargés dans le caisson (1), c'est-à-dire les produits supplémentaires qui se situent en arrière de ceux en train d'être distribués. Ces moyens (18) peuvent immobiliser lesdits produits sur place ou être agencés de sorte qu'ils les soulèvent légèrement pour obtenir en plus un délestage du dispositif de déplacement (6). Lesdits moyens (18) d'immobilisation sont constitués par des griffes latérales (19, 20) déplaçables dans au moins une position où elles sont saillantes dans le volume intérieur du caisson (1) (figure 2) et au moins une autre position où elles sont escamotées vers l'extérieur (figure 3). Ces griffes (19, 20) se situent sur la moitié arrière des parois latérales (2 et 3) du caisson (1) et passent à travers des ouvertures (21, 22) prévues dans lesdites parois (2 et 3). Elles sont articulées sur ces parois latérales (2 et 3) au moyen d'axes sensiblement horizontaux (23) qui sont guidés dans des pattes (24) fixées sur lesdites parois latérales (2 et 3). Ces griffes (19 et 20) peuvent être déplacées autour de leur axes d'articulation (23) avec des vérins hydrauliques (25). Ceux-ci sont articulés, d'une part, sur des pattes (26) solidaires des parois latérales (2 et 3) et, d'autre part, sur des pattes (27) qui sont solidaires d'entretoises (28) reliant des griffes (19, 20) entre elles.

Les déplacements des griffes (19 et 20) sur les axes d'articulation (23), à l'aide des vérins hydrauliques (25), se font du bas vers le haut lorsqu'elles sont amenées dans la position où elles sont saillantes dans le volume intérieur du caisson (1) et dans la direction inverse pour les escamoter à l'extérieur dudit volume. De chaque côté de la machine deux griffes (19, 20) sont reliées entre elles par des entretoises (28) de manière à former des paires déplaçables autour des axes d'articulation (23). Chacune de ces paires ne nécessite ainsi qu'un seul vérin hydraulique (25) pour être déplacée.

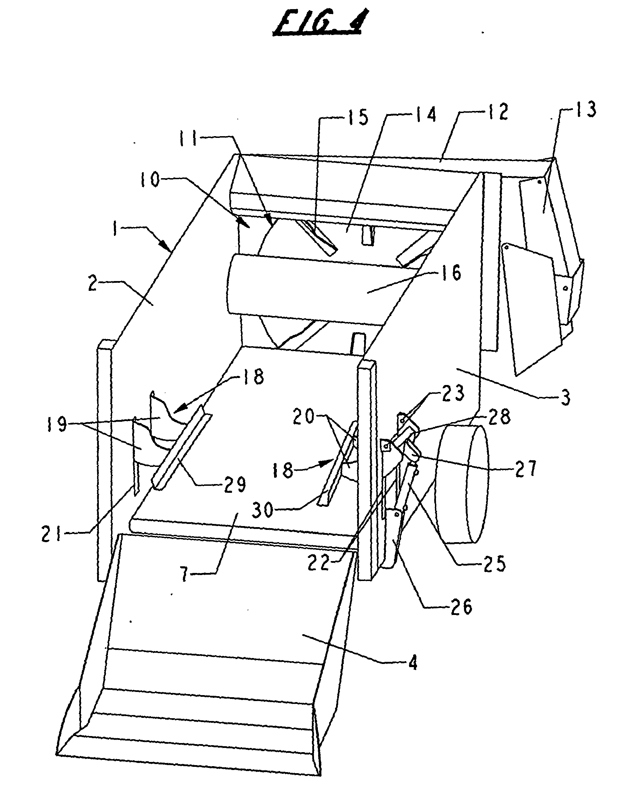

Dans la variante de réalisation selon la figure 4 les griffes (19, 20) situées sur une même paroi latérale (2, 3) du caisson (1) portent une poutrelle (29, 30) qui se situe dans ledit caisson (1). Cette poutrelle (29, 30) est sensiblement horizontale. Sa longueur est telle qu'elle permette de bloquer par exemple deux balles de produits dans un caisson qui peut en contenir trois.

La machine comporte également un timon (31) pour l'accrochage à un tracteur et des roues (32) de transport. Ledit tracteur permet de déplacer et d'animer la machine. La turbine (11), le tambour de dosage (16), le tapis (7) et les vérins hydrauliques (25) peuvent ainsi être actionnés à l'aide d'organes de transmission connectés, d'une manière connue en soi, à l'arbre de prise de force ou à des prises hydrauliques dudit tracteur.

Des balles de fourrage ou de paille peuvent être introduites dans le caisson (1) à partir de l'arrière. Avant de commencer la distribution dans l'étable, les vérins hydrauliques (25) sont commandés depuis le tracteur de sorte qu'ils déplacent les griffes de blocage (19, 20) vers l'intérieur du caisson (1). En présence de deux balles, comme cela est représenté sur la figure 1, lesdites griffes s'engagent dans la balle la plus éloignée du dispositif de distribution (10). De ce fait, elles soulèvent cette balle légèrement du tapis (7) qui est ainsi délesté du poids de celle-ci et l'immobilisent dans cette position. Dès lors la turbine (11), le tambour doseur (16) et le tapis (7) peuvent être actionnés en vue de la distribution de la balle la plus en avant. Ledit tapis (7) la maintient en contact avec le tambour doseur (16) et la turbine (11) et la fait tourner sur elle-même dans le sens indiqué par la flèche (A).

Cette balle se déroule alors d'une manière continue de sorte que les produits arrivent régulièrement jusqu'à la turbine (11) en passant entre le tambour doseur (16) et les plaques de retenue (17). Ces produits démêlés sont ensuite éjectés par la goulotte (13) en direction des auges ou des litières. Dès que cette première balle est distribuée les vérins hydrauliques (25) sont commandés de sorte qu'ils dégagent les griffes (19 et 20) vers l'extérieur du caisson (1). Elles libèrent ainsi la deuxième balle qui revient sur le tapis (7). Celui-ci l'amène alors vers le tambour de dosage (16) et la turbine (11) en vue de sa distribution de la manière décrite ci-dessus.

Sur la machine selon la variante de la figure 4, les griffes (19, 20) avec les poutrelles (29, 30) peuvent bloquer au moins deux balles de produits pendant la distribution de la balle la plus en avant. Cette machine permet d'obtenir une distribution régulière tout en ayant un volume de chargement plus important.

Les moyens d'immobilisation (18) selon l'invention permettent aussi d'immobiliser des produits chargés sous forme de balles rectangulaires ou en vrac dans le caisson (1) en vue de l'obtention d'une distribution plus régulière.

Il est bien évident que l'invention n'est pas limitée aux modes de réalisation décrits ci-dessus et représentés sur les dessins annexés. Des modifications sont possibles, notamment en ce qui concerne la constitution ou le nombre des divers éléments ou par substitution d'équivalents techniques sans pour autant sortir du domaine de protection tel que défini dans les revendications.

## Revendications

1. Machine agricole pour la distribution de produits aux animaux, comportant notamment un caisson (1) apte à recevoir les produits, un dispositif de démêlage et d'éjection (10) situé à l'extrémité avant du caisson (1) et au moins un dispositif de déplacement (6) des produits qui est situé dans le fond du caisson (1), ***caractérisée par le fait* qu'**elle comporte des moyens (18) d'immobilisation durant la distribution des produits qui se situent dans le caisson (1) en arrière de ceux en train d'être distribués.

2. Machine selon la revendication 1, ***caractérisée par le fait* que** les moyens (18) d'immobilisation sont constitués par des griffes (19, 20) qui soulèvent durant la distribution lesdits produits qui se situent dans le caisson (1) en arrière de ceux en train d'être distribués, de manière à délester le dispositif de déplacement (6) de leur poids.

3. Machine selon la revendication 1 ou 2, ***caractérisée par le fait* que** les moyens (18) d'immobilisation sont constitués par des griffes latérales (19, 20) déplaçables dans au moins une position où elles sont saillantes dans le volume intérieur du caisson (1) et au moins une autre position où elles sont escamotées.

4. Machine selon la revendication 3, ***caractérisée par le fait* que** les griffes (19, 20) se situent sur la moitié arrière des parois latérales (2, 3) du caisson (1).

5. Machine selon la revendication 3 ou 4, ***caractérisée par le fait* que** les griffes (19, 20) sont articulées sur les parois latérales (2, 3) du caisson (1) au moyen d'axes sensiblement horizontaux (23).

6. Machine selon la revendication 5, ***caractérisée par le fait* que** les griffes (19, 20) sont déplaçables autour des axes d'articulation (23) au moyen de vérins hydrauliques (25).

7. Machine selon la revendication 6, ***caractérisée par le fait* que** les griffes (19, 20) sont déplacées du bas vers le haut autour des axes d'articulation (23) pour les amener dans la position où elles sont saillantes dans le volume intérieur du caisson (1).

8. Machine selon l'une quelconque des revendications 3 à 7, ***caractérisée par le fait* que** les parois latérales du caisson (1) comportent des ouvertures (21, 22) dans lesquelles passent les griffes (19, 20).

9. Machine selon l'une quelconque des revendications 5 à 8, ***caractérisée par le fait* que** les griffes (19, 20) sont disposées par paires sur les axes d'articulation (23).

10. Machine selon l'une quelconque des revendications 3 à 9, ***caractérisée par le fait* que** les griffes (19, 20) situées sur une même paroi latérale (2, 3) du caisson (1) portent une poutrelle (29, 30) sensiblement horizontale située dans ledit caisson (1).

## Claims

1. Agricultural machine for the distribution of products to animals, comprising in particular a box (1) capable of receiving the products, an unravelling and ejection device (10) situated at the front end of the box (1) and at least one device (6) for moving the products that is situated at the bottom of the box *(1),* ***characterized in* that** it comprises means (18) of immobilizing, during distribution, the products that are in the box (1) behind those that are being distributed.

2. Machine according to Claim 1, ***characterized in* that** the immobilization means (18) consist of grips (19, 20) which raise during distribution the said products that are in the box (1) behind those that are being distributed, so as to relieve the movement device (6) of their weight.

3. Machine according to Claim 1 or 2, ***characterized in* that** the immobilization means (18) consist of side grips (19, 20) that can be moved into at least one position in which they protrude into the inner volume of the box (1) and at least one other position in which they are retracted.

4. Machine according to Claim 3, ***characterized in* that** the grips (19, 20) are situated on the rear half of the side walls (2, 3) of the box (1).

5. Machine according to Claim 3 or 4, ***characterized in* that** the grips (19, 20) are articulated on the side walls (2, 3) of the box (1) by means of substantially horizontal axes (23).

6. Machine according to Claim 5, ***characterized in* that** the grips (19, 20) can be moved about the axes of articulation (23) by means of hydraulic cylinders (25).

7. Machine according to Claim 6, ***characterized in* that** the grips (19, 20) can be moved from bottom to top about the axes of articulation (23) in order to bring them into the position in which they are protruding into the inner volume of the box (1).

8. Machine according to any one of Claims 3 to 7, ***characterized in* that** the side walls of the box (1) comprise openings (21, 22) in which the grips (19, 20) pass.

9. Machine according to any one of Claims 5 to 8, ***characterized in* that** the grips (19, 20) are placed in pairs on the axes of articulation (23).

10. Machine according to any one of Claims 3 to 9, ***characterized in* that** the grips (19, 20) situated on one and the same side wall (2, 3) of the box (1) support a substantially horizontal girder (29, 30) situated in the said box (1).

## Patentansprüche

1. Landwirtschaftliche Maschine zur Verteilung von Produkten an die Tiere, insbesondere mit einem Behälter (1), der die Produkte aufnehmen kann, einer Auflocker- und Auswurfvorrichtung (10), die sich am vorderen Ende des Behälters (1) befindet, und mindestens einer Vorrichtung (6) zur Beförderung der Produkte, die sich am Boden des Behälters (1) befindet, ***dadurch gekennzeichnet,* dass** sie Mittel (18) zur Feststellung der Produkte während der Verteilung umfasst, die sich im Behälter (1) hinter den gerade beim Verteilen befindlichen Produkten befinden.

2. Maschine nach Anspruch 1, ***dadurch gekennzeichnet,* dass** die Feststellungsmittel (18) von Haken (19, 20) gebildet sind, die während der Verteilung die Produkte, die sich in dem Behälter (1) hinter den gerade beim Verteilen befindlichen befinden, hochheben, um die Beförderungsvorrichtung (6) um ihr Gewicht zu entlasten.

3. Maschine nach Anspruch 1 oder 2, ***dadurch gekennzeichnet,* dass** die Feststellungsmittel (18) von seitlichen Haken (19, 20) gebildet sind, die in mindestens eine Position, in der sie in das Innenvolumen des Behälters (1) vorspringen, und in mindestens eine weitere Position, in der sie eingezogen sind, verschiebbar sind.

4. Maschine nach Anspruch 3, ***dadurch gekennzeichnet,* dass** sich die Haken (19, 20) auf der hinteren Hälfte der Seitenwände (2, 3) des Behälters (1) befinden.

5. Maschine nach Anspruch 3 oder 4, ***dadurch gekennzeichnet,* dass** die Haken (19, 20) an den Seitenwänden (2, 3) des Behälters (1) mit Hilfe von im Wesentlichen horizontalen Achsen (23) angelenkt sind.

6. Maschine nach Anspruch 5, ***dadurch gekennzeichnet,* dass** die Haken (19, 20) um die Gelenkachsen (23) mit Hilfe von Hydraulikzylindern (25) verschiebbar sind.

7. Maschine nach Anspruch 6, ***dadurch gekennzeichnet,* dass** die Haken (19, 20) von unten nach oben um die Gelenkachsen (23) verschoben werden, um sie in die Position zu bringen, in der sie in das Innenvolumen des Behälters (1) vorspringen.

8. Maschine nach irgend einem der Ansprüche 3 bis 7, ***dadurch gekennzeichnet,* dass** die Seitenwände des Behälters (1) Öffnungen (21, 22) umfassen, welche die Haken (19, 20) durchqueren.

9. Maschine nach irgend einem der Ansprüche 5 bis 8, ***dadurch gekennzeichnet,* dass** die Haken (19, 20) paarweise auf den Gelenkachsen (23) angeordnet sind.

10. Maschine nach irgend einem der Ansprüche 3 bis 9, ***dadurch gekennzeichnet,* dass** die Haken (19, 20), die sich auf einer selben Seitenwand (2, 3) des Behälters (1) befinden, einen im Wesentlichen horizontalen im Behälter (1) angeordneten Träger (29, 30) tragen.
